# EUROPÄISCHE PATENTSCHRIFT

(11) **EP 1 101 979 B1**
(45) Veröffentlichungstag und Bekanntmachung des Hinweises auf die Patenterteilung: **22.12.2004**
(21) Anmeldenummer: 00121831.2
(22) Anmeldetag: 06.10.2000
(51) Int. Cl.: F16H 57/12, F02B 75/06, C25D 7/00

(54) **Getriebe, inbesondere für Ausgleichswellen von Brennkraftmaschine**
Transmission for balancing shafts of an internal combustion engine
Transmission pour les arbres d'équilibrage d'un moteur à combustion interne

(30) Priorität: 18.11.1999 DE 19955474
(43) Veröffentlichungstag der Anmeldung: 23.05.2001
(73) Patentinhaber: Bayerische Motoren Werke Aktiengesellschaft, 80809 München (DE)
(72) Erfinder: Kratochwill, Helmut, Dr., 4400 Steyr (AT); Ratzberger, Reinhard, 4431 Haidershofen (AT); Reisinger, Walter, 4311 Schwertberg (AT); Bachner, Günther, 4400 Steyr (AT)

(56) Entgegenhaltungen:
- EP-A- 0 942 200
- CH-A- 681 370
- DE-A- 4 428 999
- DE-A- 19 625 892
- DE-C- 883 379
- US-A- 5 962 376
- PATENT ABSTRACTS OF JAPAN vol. 005, no. 076 (M-069), 20. Mai 1981 (1981-05-20) & JP 56 024257 A (YAMAHA MOTOR CO LTD), 7. März 1981 (1981-03-07)
- PATENT ABSTRACTS OF JAPAN vol. 008, no. 249 (M-338), 15. November 1984 (1984-11-15) & JP 59 126074 A (NISSAN JIDOSHA KK), 20. Juli 1984 (1984-07-20)
- PATENT ABSTRACTS OF JAPAN Bd. 1998, Nr. 01 30 Januar 1998 & JP 09 229 165 A (NISSAN MOTOR CO LTD) 02 September 1997

## Beschreibung

Die Erfindung bezieht sich auf ein Stirnradgetriebe an einer Brennkraftmaschine mit den im Oberbegriff des unabhängigen Patentanspruches angegebenen Merkmalen.

Bekanntlich dient das Zahnflankenspiel, insbesondere als Verdrehflankenspiel, der Ausbildung einer hydrodynamischen Schmierung, eines Ausgleiches von Maßänderungen durch Temperatureinflüsse sowie eines- Ausgleiches einer Zahndeformation durch die Beanspruchung sowie ferner einem Ausgleich von Fertigungs- und Montagefehlern.

Bei kegelig ausgebildeten Zahnrädern oder Zahnrädern mit keilförmig gestalteten Zähnen ist eine mechanische Flanken - Spieleinstellung durch eine Axialverschiebung eines Zahnrades erzielbar(DE-B 1 180596;DE-OS 2020722). Bei Zahnrädern mit achsparallelen Zähnen ist es bekannt, eines der Zahnräder über eine Exzenterbuchse zu lagern für eine Spieleinstellung(DE-PS 650754).

Eine weitere Vorgehensweise zur Einstellung eines Zahnflankenspiels in einem Zahnrad-Getriebe ist bekannt aus der DE-Z " Dampf 20", Modell-Spezial, Neckar-Verlag GmbH, Klosterring 1, Villingen-Schwenningen, ISBN-3-7883-0609-2. In diesem Dokument ist auf Seite 61 angegeben, wonach ein Zahnspiel zwischen einem drehbar gelagerten ersten Zahnrad und einem zunächst lose zugeordneten zweiten Zahnrad mittels eines zwischen Zahnflanken ineinander greifender Zähne eingebrachten, dünnen Kartonstreifens festgelegt wird, wobei mittels dieser Zahnspieleinstellung auch erst die Lage der Drehachse des zunächst losen Zahnrades festgelegt wird. Eine für Präzisionsgetriebe geeignete Methode zur Zahn- bzw. Flankenspieleinstellung liegt hiermit nicht vor.

Anstelle des Kartonstreifens ist als Zwischenlage auch ein als Präzisions - Lehrenband ausgebildetes Metall-Folienband verwendbar, beschrieben auf Seite 338 des Hoffmann Qualitätswerkzeuge-Kataloges von 1981 der Fa. Hoffmann GmbH & Co. KG, München, Haberlandstraße 55. Anstelle des Metall-Folienbandes erscheint auch ein Kunststoff-Folienstreifen naheliegend.

Die vorgenannten Zwischenlagen zur Zahnspieleinstellung in einem Getriebe sind in der Handhabung umständlich , zeitaufwändig und ungenau.

Die vorgenannten Methoden entfallen mit den in dem DE-Fachbuch "Maschinenelemente", Band II, 2. Auflage, von Niemann und Winter auf Seite 365 unten angegebenen Ausführungen über spielarme Zahnradgetriebe, wonach durch Verkupfern der Zähne eines Zahnrades sich das Zahnflankenspiel praktisch auf Null bringen lässt. Dies gilt im Neuzustand des Getriebes, denn die Kupfer-Auflage unterliegt beim Betrieb des Getriebes einem laufbedingtem Abrieb. Damit ist zwar für eine hydrodynamische Schmierung das erforderliche Zahnflankenspiel erzielt, jedoch ist das Schmiermittel des Getriebes mit Kupfer-Abrieb in nachteiliger Weise befrachtet.

Dieser Umstand der Schmiermittel-Befrachtung ist auch mit dem in dem gattungsbildenden "Abstract" zur japanischen Patent - Offenlegungsschrift JP 56 024 257 beschriebenen Gegenstand gegeben. Gezeigt und beschrieben ist ein Stimradgetriebe an einer Brennkraftmaschine, bei dem ein um eine gehäusefeste Achse drehbares erste Zahnrad mit einem dritten Zahnrad über ein Zwischenrad als zweitem Zahnrad in Antriebsverbindung steht, wobei das mit einer mittels betriebsbedingtem Abrieb entfembaren Auflage versehene Zwischenrad zur Einstellung eines Null-Zahnflankenspiels achsparallel über eine Pumpe verschieb- und festlegbar angeordnet ist.
Dieses bekannte Stimradgetriebe umfasst durch ein mit dem Zwischenrad drehfest verbundenes Ritzel zwei Zahnradpaarungen, wovon lediglich die antriebsseitige Zahnradpaarung mit dem Zwischenrad eine durch Abrieb der Auflage selbsttätige Zahnspiel-Einstellung aufweist.

Angaben zur Beschaffenheit der abreibbaren Auflage enthält das Dokument allerdings nicht.
Derartige Angaben sind auch in einem weiteren Stand der Technik nicht bekannt. Zwar ist aus einem "Abstract" zu einer weiteren japanischen Patent-Offenlegungsschrift JP 09 229 165 ein Stirnradgetriebe bekannt, bei dem zur Erzielung einer verlängerten Lebensdauer ein Zahnrad mit einer dauerhaften Auflage aus einem Kunststoffbinder mit eingelagertem Festschmierstoff (MoS2) ausgebildet ist, wobei das andere Zahnrad zumindest einen Zahnkranz aus Fluor-Kunststoff aufweist.

Weiter ist aus der deutschen Offenlegungsschrift DE 196 25 892 A1 ein Metallgetriebe bekannt, bei dem die Zähne eines Zahnrades mit einer ebenfalls dauerhaften Auflage aus einem Metall-Verbundwerkstoff mit einem eingelagerten Festschmierstoff ausgebildet sind.

Beim erstgenannten Beispiel dient der dauerhaft angeordnete Festschmierstoff einer Verlängerung der Lebensdauer des Getriebezahnrades, und beim zweiten Beispiel dient der bis zu 50% einem Verbundwerkstoff beigefügte Festschmierstoff einer akustischen Dämpfung des Zahnrad-Laufgeräusches.

Der Erfindung liegt die Aufgabe zugrunde, für ein gattungsgemäßes Stirnradgetriebe ohne die vorgenannten Nachteile eine relativ einfache Einstellung eines Zahnflankenspiels aufzuzeigen ohne wiederholtes Messen des Flankenspiels bei gezieltem radialem Verschieben einer Radwelle einerseits und ohne einer aufwändigen mechanischen Vorrichtung andererseits.

Diese Aufgabe ist mit dem Patentanspruch 1 gelöst.

Mit der Erfindung können in vorteilhafter Weise mehrere in einer Reihe miteinander in Antriebsverbindung zusammenwirkende Zahnräder eines Stimradgetriebes flankenspielorientiert justiert werden, wobei der erfindungsgemäß verwendete, beim Betrieb des Stirnradgetriebes abreibbare Festschmierstoff als jeweilige Auflage der Zahnradzähne femer in vorteilhafter Weise auf eine Verträglichkeit mit dem für das jeweilige Getriebe vorgesehenen Schmiermittel optimal einstellbar ist und damit eine nachteilige Befrachtung des Schmiermittels vermieden ist.

Der erfindungsgemäß gewählte Festschmierstoff bietet mit der Möglichkeit einer galvanischen Abscheidung auf den Zähnen eines Zahnrades den Vorteil gleichmäßig dicker Auflagen von vorbestimmter Stärke, womit ein gewünschtes Flankenspiel sicher erzielt ist. Ein vorteilhaft einheitliches Flankenspiel ist mit der zunächst an der lose angeordneten Pumpe angreifenden Kraft-Vorrichtung sichergestellt.

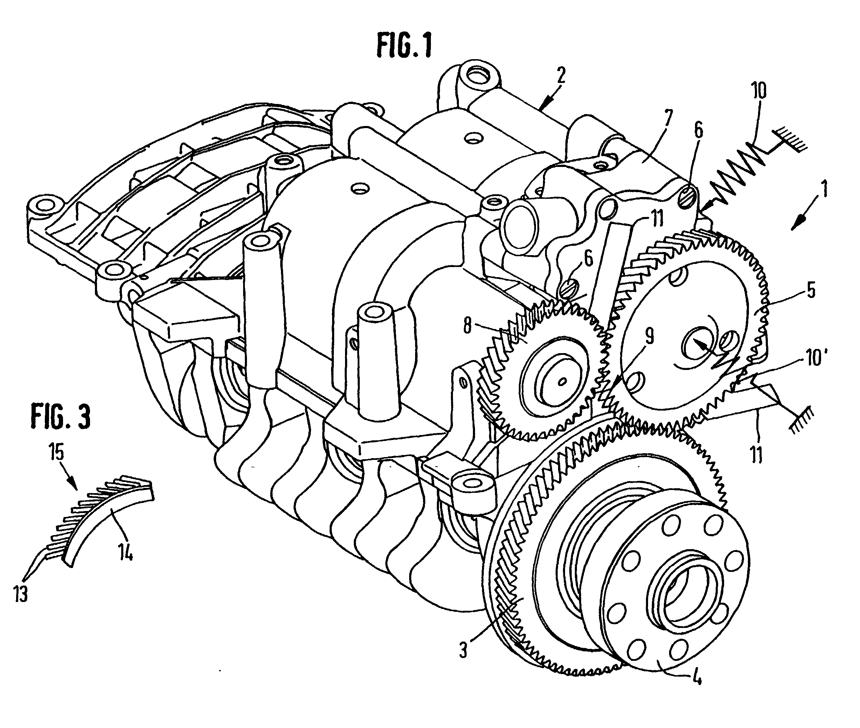

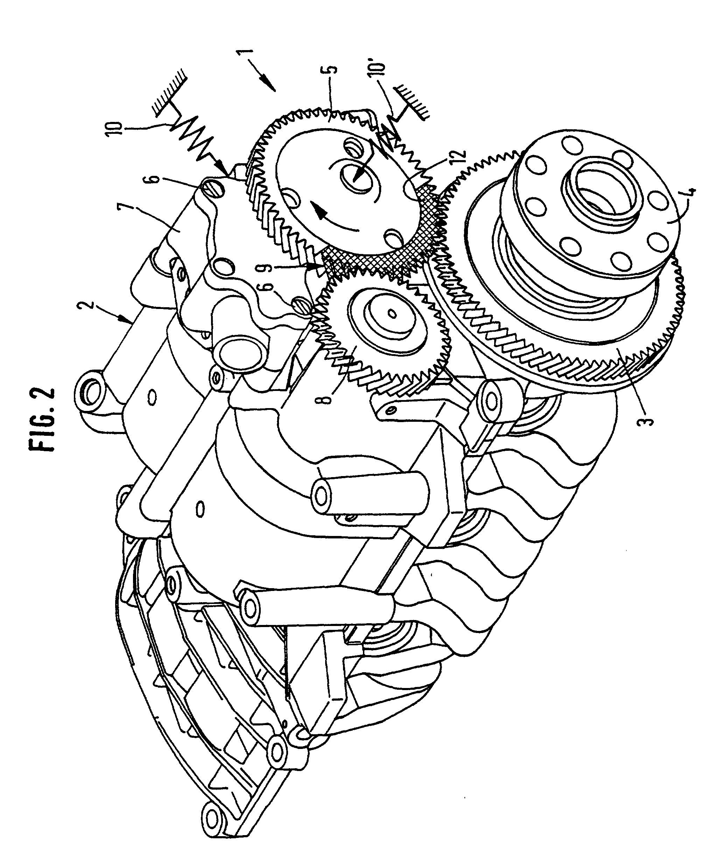

Die Erfindung ist anhand eines in der Zeichnung dargestellten Beispiels beschrieben.

Die einzige Figur zeigt ein Stirnradgetriebe 1 für eine Pumpe 7 und eine Ausgleichswellen-Vorrichtung 2 einer nicht näher dargestellten Brennkraftmaschine, wobei das Stirnradgetriebe 1 ein erstes, um eine gehäusefeste Achse drehbares Zahnrad 3 auf einer Kurbelwelle 4 der Brennkraftmaschine umfasst. Mit dem Kurbelwellen-Zahnrad 3 kämmt ein zweites Zahnrad 5, das zum Antrieb einer bei der Montage begrenzt verschiebbaren und anschließend mittels Schraubbolzen 6 feststellbaren Pumpe 7 dient. Wie aus der Figur weiter ersichtlich, dient das zweite Zahnrad 5 als Zwischenrad für ein drittes Zahnrad 8 zum Antrieb nicht aufgezeigter Ausgleichswellen in der Ausgleichswellen-Vorrichtung 2.

Zur Einstellung eines Zahnflankenspiels zwischen den drei miteinander kämmenden Zahnrädern 3, 5, 8 dient eine zwischen Zahnflanken ineinander greifender Zähne dieser kämmenden Zahnräder 3, 5, 8 entfembar angeordnete Auflage 9. Über diese Auflage 9 ist mittels der mit einer vorbestimmten Kraft gemäß einer bei lose angeordneter Pumpe 7 einwirkenden Federvorspannung 10 das zum ersten und dritten Zahnrad 3, 8 zustellbare zweite Zahnrad 5 spielfrei mit korrespondierenden Zähnen der Zahnräder 3, 5 in kämmenden Eingriff gebracht.

Die Auflage 9 auf den Zähnen des zweiten Zahnrades bzw. Zwischenrades 5 ist aus einem Festschmierstoff gebildet, der vorzugsweise zur Erzielung einer einheitlichen Dicke der Auflage 9 galvanisch auf den Zähnen abgeschieden ist. Die auf beiden Flanken eines Zahnes bzw. auf gegenüberliegenden Flanken einer Zahnlücke vorgesehene Auflage 9 weist jeweils eine Materialstärke von 10µm bis 60µm auf für ein Gesamt-Verdrehflankenspiel von 20µm - 120µm nach lauf- bzw. betriebsbedingtem Abrieb der Zahn- Auflage 9 des Zahnrades 5. Diese angegebenen Dickenmaße verstehen sich insbesondere in den Eingriffspunkten auf den Teilkreisen der Zahnräder 3,5,8, wobei ein Null-Flankenspiel zwischen dem Zwischenrad 5 und den Zahnrädern 3 und 8 mittels einer auf die leicht gelöste Pumpe 7 seitlich angreifenden Kraft-Vorrichtung über die Federvorspannung 10 erzielt ist.

Zur Steigerung der Einstellgenauigkeit bei schräg verzahntem Stimradgetriebe 1 ist zusätzlich eine axial gerichtete Kraftkomponente 10' auf die noch gelöst angeordnete Pumpe 7 einwirkend vorgesehen. Schließlich werden für eine Feineinstellung des Null-Flankenspiels die Zahnräder 3, 5, 8 geringfügig hin - und hergedreht und anschließend die Pumpe 7 fixiert.

Im Rahmen der Erfindung kann das zweite Zahnrad 5 als Zwischenrad auch in einem achsparallel verschiebbaren, nicht gezeigten Lagerschild gelagert sein.

## Patentansprüche

1. Getriebe, insbesondere für Ausgleichswellen von Brennkraftmaschinen,
- bei dem mindestens ein um eine gehäusefeste Achse drehbares erstes Zahnrad (3) mit einem zur Einstellung eines Zahnflankenspiels bei der Montage achsparallel verschiebbaren zweiten Zahnrad (5) kämmt, wobei
- eine zwischen Zahnflanken ineinandergreifender Zähne der kämmenden Zahnräder (3,5,8) eingebrachte Zwischenlage (9) der Einstellung des Zahnflankenspiels dient, und
- die als Auflage auf den Zahnflanken mindestens eines der Zahnräder (3,5,8) ausgebildete Zwischenlage (9) mittels des mit einer vorbestimmten Kraft zum ersten Zahnrad (3,8) zustellbaren zweiten Zahnrades (5) spielfrei zwischen korrespondierenden Zahnflanken der Zahnräder (3,5,8) angeordnet ist, und
- mittels betriebsbedingtem Abrieb der Auflage bzw. der Zwischenlage (9) ein vorbestimmtes Zahnflankenspiel erzielt ist,
**dadurch gekennzeichnet,**
- **dass** die Auflage bzw. Zwischenlage (9) aus einem Festschmierstoff gebildet ist, und
- dass zwischen einem ersten Kurbelwellen-Zahnrad (3) und einem dritten Zahnrad (8) für Ausgleichswellen einer Brennkraftmaschine ein zweites, eine bei der Montage begrenzt verschiebbare und anschließend feststellbare Pumpe (7) antreibendes Zahnrad (5) als Zwischenrad dient, wobei
- die Auflage bzw. Zwischenlage (9) mindestens über zwei Kämmbereiche des Stirnradgetriebes (1) angeordnet ist, und
- **dass** das Zwischenrad (5) über eine an der Pumpe (7) seitlich angreifende Kraft-Vorrichtung (z.B. Feder 10) in spielfreiem Kämmeingriff zur Einstellung des Zahnflankenspiels mit dem ersten und dem dritten Zahnrad (3,8) gebracht ist.

2. Getriebe nach Anspruch 1, **dadurch gekennzeichnet,**
- **dass** die Auflage bzw. Zwischenlage (9) zumindest auf einem der Zahnräder (3,5,8) galvanisch abgeschieden ist.

3. Getriebe nach Anspruch 2, **dadurch gekennzeichnet,**
- **dass** die Auflage bzw. Zwischenlage (9) auf beiden Flanken eines Zahnes bzw. auf gegenüberliegenden Flanken einer Zahnlücke jeweils eine Materialstärke von 10 µm - 60 µm aufweist für ein Gesamt - Verdrehflankenspiel von 20 µm - 120µm.

4. Getriebe nach Anspruch 1, **dadurch gekennzeichnet**,
- dass bei schräg verzahntem Stirnradgetriebe (1) zusätzlich eine axial gerichtete Kraft-Komponente ( 10') auf die Pumpe (7) einwirkt.

## Claims

1. A gear unit, particularly for differential shafts of internal combustion engines,
- wherein at least one first gearwheel (3) rotatable around a shaft fixed to a housing, meshes with a second gearwheel (5) movable axially parallel during assembly in order to adjust a tooth-flank clearance, wherein
- the- tooth-flank clearance is adjusted by an intermediate layer (9) inserted between the flanks of interlocking teeth on the meshing gearwheels (3, 5, 8) and
- the intermediate layer (9), in the form of a coating on the tooth flanks of at least one gearwheel (3, 5, 8), is disposed without clearance between corresponding tooth flanks of the gearwheels (3, 5, 8) by means of the second gearwheel (5), which is adjustable by a predetermined force relative to the first gearwheel (3, 8), and
- a preset tooth-flank clearance is obtained by wear on the coating or intermediate layer (9) during operation, **characterised in that**
- the coating or intermediate layer (9) is made of a solid lubricant and
- a second gearwheel (5) driving a pump (7) which is movable during a limited extent during assembly and subsequently immobilised serves as. an intermediate wheel between a first crankshaft gearwheel (3) and a third gearwheel (8) for differential shafts of an internal combustion engine, wherein
- the coating or intermediate layer (9) is disposed at least over two meshing regions of the spur gear unit (1), and
- the intermediate wheel (5) is brought into clearance-free meshing engagement by an energy device (e.g. a spring 10) laterally engaging the pump (7) in order to adjust the tooth-flank clearance with the first and the second gearwheel (3, 8).

2. A gear unit according to claim 1, **characterised in that**
- the coating or intermediate layer (9) is electrodeposited on at least one of the gearwheels (3, 5, 8).

3. A gear unit according to claim 2, **characterised in that**
- the coating or intermediate layer (9) on both flanks of a tooth or on opposite flanks of a tooth gap has a thickness of 10 - 60 µm for a total torsional flank clearance of 20 - 120 µm.

4. A gear unit according to claim 1, **characterised in that**
- in the case of helical-toothed spur gears (1) an axially directed component of force (10') additionally acts on the pump (7).

## Revendications

1. Transmission, en particulier pour des arbres d'équilibrage de moteurs à combustion interne, dans laquelle
- au moins un premier pignon denté (3) pouvant pivoter autour d'un axe fixe par rapport au carter s'engrène avec un deuxième pignon denté (5) de réglage d'un jeu de flancs de dent lors du montage pouvant coulisser parallèlement à l'axe,
- une couche intermédiaire (9) introduite entre des dents s'engageant les unes avec les autres entre des flancs de dents de pignons (3, 5, 8) engrenés sert au réglage du jeu de flanc de dents,
- la couche intermédiaire (9) constituée en tant que revêtement sur les flancs des dents d'au moins l'un des pignons (3, 5, 8), étant disposée sans jeu entre des flancs en correspondance de dents des pignons (3, 5, 8), au moyen d'un deuxième pignon denté (5) associé avec une force prédéterminée au premier pignon denté (3, 8) et
- un jeu de flancs de dents prédéterminé est obtenu au moyen de l'abrasion causée par l'utilisation du revêtement ou de la couche intermédiaire (9),
**caractérisé en ce que**
- le revêtement ou la couche intermédiaire (9) est formé d'un lubrifiant solide et
- entre un premier pignon denté de vilebrequin (3) et un troisième pignon denté (8) pour des arbres d'équilibrage d'un moteur à combustion interne, un deuxième pignon denté (5) entraînant une pompe (7) pouvant coulisser au montage de façon limitée et pouvant ensuite être fixée, sert de pignon intermédiaire,
- le revêtement ou la couche intermédiaire (9) est disposé au moins sur deux zones d'engrenage de la transmission à pignons droits (1) et
- le pignon intermédiaire (5) est mis en engagement d'engrenage sans jeu pour régler de jeu de flanc de dents avec le premier et le troisième pignon denté (3, 8) par un dispositif d'application de force (par exemple, le ressort 10) agissant latéralement sur la pompe (7).

2. Transmission selon la revendication 1,
**caractérisé en ce que** le revêtement ou la couche intermédiaire (9) est déposé galvaniquement au moins sur l'un des pignons (3, 5, 8).

3. Transmission selon la revendication 2,
**caractérisé en ce que**
le revêtement ou la couche intermédiaire (9) présente, sur les deux flancs d'une dent ou sur des flancs situés face à face d'un espace entre les dents, chaque fois une épaisseur de matériau de 10 µm à 60 µm pour un jeu de flancs à la torsion global de 20 µm à 120 µm.

4. Transmission selon la revendication 1,
**caractérisé en ce que**
dans le cas de transmissions à pignons droits (1) à pignons à taille oblique, une composante de force (10') supplémentaire dirigée dans le sens axial agit sur la pompe (7).
